# EUROPEAN PATENT SPECIFICATION

(11) **EP 3 758 276 B1**
(45) Date of publication and mention of the grant of the patent: **17.08.2022**
(21) Application number: 18943152.1
(22) Date of filing: 12.12.2018
(51) Int. Cl.: H04L 9/06, H04L 9/08

(54) **DATA PROCESSING METHOD, CIRCUIT, TERMINAL DEVICE STORAGE MEDIUM**
DATENVERARBEITUNGSVERFAHREN, SCHALTUNG, ENDGERÄT UND SPEICHERMEDIUM
PROCÉDÉ DE TRAITEMENT DE DONNÉES, CIRCUIT, DISPOSITIF TERMINAL ET SUPPORT DE STOCKAGE

(43) Date of publication of application: 30.12.2020
(73) Proprietor: SHENZHEN GOODIX TECHNOLOGY CO., LTD., Shenzhen, Guangdong 518045 (CN)
(72) Inventor: WEI, Jian, Shenzhen, Guangdong 518045 (CN); WANG, Dongge, Shenzhen, Guangdong 518045 (CN); SHEN, Ailin, Shenzhen, Guangdong 518045 (CN)
(74) Representative: J A Kemp LLP
(86) International application number: PCT/CN2018/120732
(87) International publication number: WO 2020/118583

(56) References cited:
- WO-A1-2011/149986
- WO-A2-2005/006197
- CN-A- 101 051 892
- CN-A- 101 540 191
- CN-A- 106 688 027
- JUN YANG ET AL: "Fast Secure Processor for Inhibiting Software Piracy and Tampering", MICROARCHITECTURE, 2003. MICRO-36. PROCEEDINGS. 36TH ANNUAL IEEE/ACM I NTERNATIONAL SYMPOSIUM ON 3-5 DEC. 2003, PISCATAWAY, NJ, USA,IEEE, 1730 MASSACHUSETTS AVE., NW, WASHINGTON, DC 20036-1992 USA, 3 December 2003 (2003-12-03), page 351, XP058251139, ISBN: 978-0-7695-2043-8

## Description

### TECHNICAL FIELD

The present application relates to the field of data processing and, in particular to a data processing method, a circuit, a terminal device, and a storage medium.

### BACKGROUND

With the rapid development of information technology, more and more embedded system-on-a-chip (SoC) products use an external flash (FLASH) to store data such as program codes to reduce product costs.

In order to achieve security of data, it is necessary to encrypt the data stored in the external FLASH. Accordingly, for an SoC chip with a locally-loaded-code-program execute in place (XIP) function, it is required to directly load data from the external FLASH during the power-on or operating of the chip and decrypt the loaded data quickly, and to load the decrypted data into a cache (cache) for execution by a microcontroller unit (MCU). Therefore, data decryption delay is an important performance to measure the quality of products, and the technical problem to be solved urgently in the field is how to decrypt data to reduce the data decryption delay.

WO 2005/006197 A2 discloses that a method and apparatus for memory encryption with reduced decryption latency. In one embodiment, the method includes reading an encrypted data block from memory. During reading of the encrypted data block, a keystream used to encrypt the data block is regenerated according to one or more stored criteria of the encrypted data block. Once the encrypted data block is read, the encrypted data block is decrypted using the regenerated keystream.

WO 2011/149986 A1 discloses techniques for memory compartmentalization for trusted execution of a virtual machine (VM) on a multi-core processing architecture are described. Memory compartmentalization may be achieved by encrypting layer 3 (L3) cache lines using a key under the control of a given VM within the trust boundaries of the processing core on which that VMs is executed. Further, embodiments described herein provide an efficient method for storing and processing encryption related metadata associated with each encrypt/decrypt operation performed for the L3 cache lines.

Fast Secure Processor for Inhibiting Software Piracy and Tampering by Jun Yang *et al* from Proceedings of the 36th International Symposium on Microarchitecture (MICRO-36'03) discloses an innovative technique in which the cryptography computation is shifted off from the memory access critical path. Specifically, authors of this paper propose to use a different encryption scheme, namely "one-time pad" encryption, to produce the instructions and data ciphertext.

### SUMMARY

The present application provides a data processing method, a circuit and a terminal device, as defined in the appended claims, so as to reduce data decryption delay.

In a first aspect, the present application provides a data processing method, including: generating a decryption keystream of first data according to a physical start address of the first data before or during reading the first data from a flash, where the first data is a data block; and decrypting the first data through the decryption keystream and writing the decrypted first data into a cache; where the method further includes: when the first data is initial first data, acquiring a logical start address of the initial first data from a microcontroller unit MCU and determining the physical start address of the initial first data according to the logical start address; and when the first data is non-initial first data, determining the physical start address of the non-initial first data according to the physical start address of the initial first data and an offset between the physical start address of the non-initial first data and the physical start address of the initial first data; where the method further includes: determining that the first data is the initial first data when a first enable signal is received; and determining that the first data is the non-initial first data when a second enable signal is received, wherein the first enable signal is different from the second enable signal.

Base on this, as long as the data processing circuit acquires the first data, the decryption keystream of the first data has already been pre-generated, so that the data processing circuit can directly decrypt the first data, thus reducing the data decryption delay.

Optionally, the decrypting the first data through the decryption keystream includes: performing an XOR operation on the decryption keystream and the first data to decrypt the first data, when a length of the decryption keystream and a length of the first data are the same; performing an extraction on the decryption keystream in accordance with the length of first data and performing the XOR operation on the decryption keystream obtained after the extraction and the first data to decrypt the first data, when the length of the decryption keystream is greater than the length of the first data.

In this embodiment, the data processing circuit can decrypt the first data by performing the XOR operation in way of stream encryption on the decryption keystream and the first data. Since the XOR operation is a combinational circuit, the decryption delay of data may be further reduced in this way.

Optionally, the method further includes: generating an encryption keystream of second data according to a physical start address of the second data; and encrypting the second data through the encryption keystream and writing the encrypted second data into the flash.

In this embodiment, for the same data, the corresponding encryption keystream thereof is the same as the decryption keystream thereof, that is, the synchronization of the encryption key and decryption key is realized.

Optionally, when the second data is the initial second data, a logical start address of the initial second data is acquired from an MCU and the physical start address of the initial second data is determined according to the logical start address; when the second data is non-initial second data, the physical start address of the non-initial second data is determined according to the physical start address of the initial second data and an offset between physical start address of the non-initial second data and the physical start address of the initial second data. The method can effectively determine the physical start address of the second data.

Optionally, the encrypting the second data through the encryption keystream includes: performing an XOR operation on the encryption keystream and the second data to encrypt second data when a length of encryption keystream and a length of second data are the same; performing an extraction on the encryption keystream in accordance with the length of the second data and performing the XOR operation on the encryption keystream obtained after the extraction and the second data to encrypt the second data when the length of the encryption keystream is greater than the length of the second data.

In this embodiment, the data processing circuit can decrypt the second data by performing the XOR operation on the encryption keystream and the second data. Since the XOR operation is a combinational circuit, data encryption efficiency can be improved in this way.

In a second aspect, the present application provides a data processing circuit, including:
a first generating module, configured to generate a decryption keystream of first data according to a physical start address of the first data before or during reading first data from a flash, where the first data is a data block;
a decryption module, configured to decrypt the first data through the decryption keystream and write the decrypted first data into a cache;
where the circuit further includes: a first determination module, configured to: when the first data is initial first data, acquire a logical start address of the initial first data from a microcontroller unit MCU, and determine the physical start address of the initial first data according to the logical start address; and when the first data is non-initial first data, determine the physical start address of the non-initial first data according to the physical start address of the initial first data and an offset between the physical start address of the non-initial first data and the physical start address of the initial first data;
where the first determination module is specifically configured to: determine that the first data is the initial first data when a first enable signal is received; and determine that the first data is the non-initial first data when a second enable signal is received, wherein the first enable signal is different from the second enable signal.

In a third aspect, the present application provides a data processing circuit, including: a processor; a memory, configured to store instructions executable by the processor to cause the processor to execute the data processing method according to the first aspect or optional implementations of the first aspect.

In a fourth aspect, the present application provides a terminal device, including: the data processing circuit according to the second aspect or the third aspect, an MCU and a flash. Two ends of the data processing circuit are respectively connected with the MCU and the flash.

The present application provides a data processing method, a circuit and a terminal device. Where, the data processing circuit can generate the decryption keystream of the first data according to the physical start address of the first data before or during reading the first data from the flash. Base on this, as long as the data processing circuit acquires the first data, the decryption keystream of the first data has already been pre-generated, so that the data processing circuit can directly decrypt the first data, thus reducing the data decryption delay. Optionally, in this embodiment, the data processing circuit can decrypt the first data by performing XOR operation on the decryption keystream and the first data. Since the XOR operation is a combinational circuit, the data decryption delay may be further reduced in this way.

### BRIEF DESCRIPTION OF DRAWINGS

To describe the technical solutions in embodiments of the present application or in the prior art more clearly, the following briefly introduces the accompany drawings needed for describing the embodiments or the prior art. Apparently, the accompanying drawings in the following description illustrate merely some embodiments of the present application, and those of ordinary skill in the art may still derive other drawings from these accompanying drawings without creative effort.
FIG 1 is a schematic diagram of an embedded SoC chip and an external FLASH provided in the prior art;
FIG. 2 is a flowchart of a data processing method provided in an embodiment of the present application;
FIG. 3 is a schematic diagram of instruction and data transmission provided in an embodiment of the present application;
FIG. 4 is a schematic diagram of internal modules and data processing flow of a flash controller provided in an embodiment of the present application;
FIG. 5 is a flowchart of a data processing method provided in another embodiment of the present application;
FIG 6 is a schematic diagram of internal modules and a data processing flow of a flash controller provided in another embodiment of the present application;
FIG. 7 is a schematic diagram of a data processing circuit provided in an embodiment of the present application; and
FIG 8 is a schematic diagram of an embedded SoC chip and an external FLASH provided in an embodiment of the present application.

### DESCRIPTION OF EMBODIMENTS

To make the objectives, technical solutions, and advantages of embodiments of the present application clearer, the following clearly and comprehensively describes the technical solutions in embodiments of the present application with reference to the accompanying drawings in embodiments of the present application. Apparently, the described embodiments are merely a part rather than all embodiments of the present application. All other embodiments obtained by those of ordinary skill in the art based on embodiments of the present disclosure without creative effort shall fall within the protection scope of the present application.

The terms "first", "second", "third", "fourth" and etc. (if present) in the description, claims and the above accompanying drawings of the present application are used to distinguish similar objects, and not necessarily used to describe a specific order or sequence. It should be understood that the terms used in this way can be interchanged under appropriate circumstances, so that the embodiments of the present application described herein can be implemented in an order other than those illustrated or described herein, for example. Furthermore, the terms "including" and "comprising" as well as any variations thereof are intended to cover non-exclusive inclusions. For example, processes, methods, systems, products or devices including a series of steps or units are not be limited to those steps or units explicitly listed, but may include other steps or units not explicitly listed or inherent to these processes, methods, products or devices.

Before technical solutions of the present application being introduced, the following first introduces an embedded SoC chip and an external FLASH.

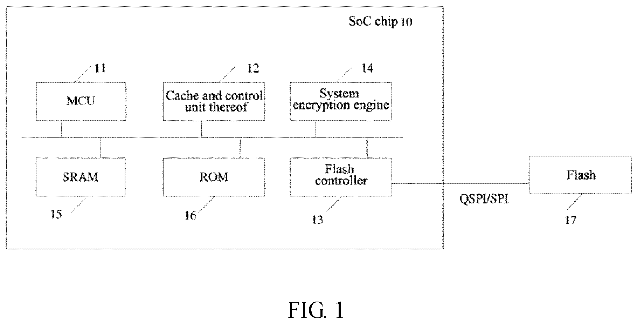

FIG. 1 is a schematic diagram of an embedded SoC chip and an external FLASH provided in the prior art. As shown in FIG. 1, the SoC chip 10 includes:
a microcontroller unit (MCU) 11: a core controller of the embedded SoC chip, configured to run data such as code programs;
a cache (Cache) and a control unit 12 of the cache: a code program can run at high speed in the MCU 11 when the code program is cached, where the code program comes from an on-chip static random-access memory (SRAM) and/or the external FLASH;
a flash controller 13: configured to read and write data in the external FLASH, and generally access the FLASH in the way of a quad serial peripheral interface (QSPI) or a serial peripheral interface (SPI);
a system encryption engine 14: configured to encrypt data by adopting the same encryption mechanism as decryption, and write the encrypted data into the FLASH via QSPI or SPI through the flash controller 13;
an on-chip SRAM 15: configured to store data such as program codes;
a read-only memory (ROM) 16: configured to store programs for execution by the SoC chip when the SoC chip is powered on;
a QSPI/SPI: configured to realize data transmission between the flash controller 13 and the FLASH;
in addition, an external FLASH 17: configured to store data such as code programs for the SoC chip to read and write data in the FLASH.

As mentioned above, in order to achieve security of data, it is necessary to encrypt the data stored in the external FLASH. Accordingly, for the SoC chip with the XIP function, it is required to directly load data from the external FLASH during the power-on or operating of the chip and decrypt the loaded data quickly, and to load the decrypted data into the cache for execution by the MCU. Therefore, the technical problem to be solved urgently by the present application is how to decrypt data to reduce the data decryption delay.

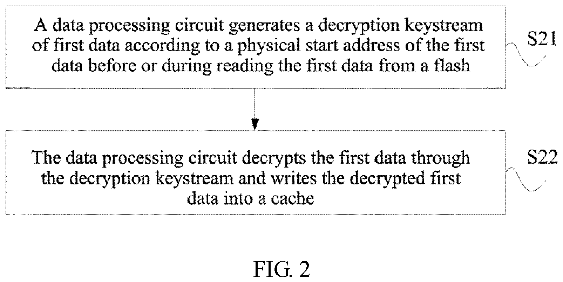

To solve the above technical problem, the present application provides a data processing method, a circuit, a terminal device, and a storage medium. Specifically, FIG. 2 is a flowchart of a data processing method provided in an embodiment of the present application. The executive entity of the method may be a data processing circuit or a terminal device. The data processing circuit may be integrated in an SoC chip, for example, the circuit is integrated in a flash controller, or the circuit is a flash controller or an SoC chip, which is not limited in the present application. The data processing circuit is taken as the executive entity of the method to exemplify. As shown in FIG. 2, the method includes the following steps:
S21: the data processing circuit generates a decryption keystream of first data according to a physical start address of the first data before or during reading the first data from a flash;
S22: the data processing circuit decrypts the first data through the decryption keystream and writing the decrypted first data into a cache.
S21 is described as follows.

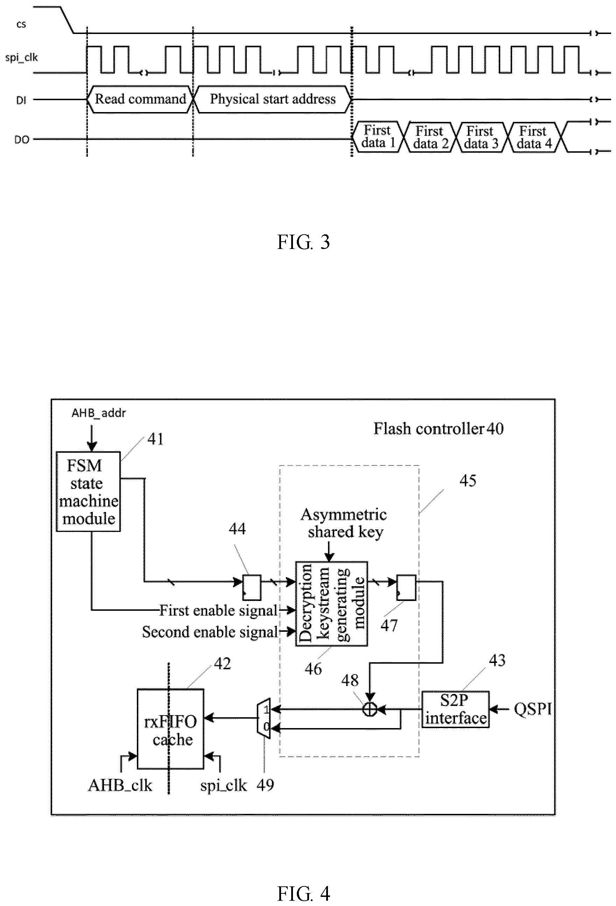

This embodiment is applied to the scenario where the data processing circuit reads data from the flash. As mentioned above, in order to achieve the security of data, the data in the flash is encrypted, so the first data needs to be decrypted after the data processing circuit reading the first data from the flash. In order to reduce the data decryption delay, this embodiment proposes to generate the decryption keystream of the first data before reading or during reading the first data from the flash, where each of the first data has a unique decryption keystream. For example, FIG. 3 is a schematic diagram of instruction and data transmission provided in an embodiment of the present application. As shown in FIG. 3, the data processing circuit sends a read command and a physical start address of initial first data to the FLASH before reading the initial first data, in which the data processing circuit can generate a decryption keystream of each of the first data in advance during the process of sending the read command and the physical start address of the initial first data to the FLASH.

In this embodiment, the data processing circuit can generate the decryption keystream of the first data according to the physical start address of the first data, where the physical start address of the first data refers to the physical start address of the first data in the flash.

The data processing circuit acquires the physical start address of the first data in different ways for different first data. Optionally, when the first data is the initial first data, the data processing circuit acquires a logical start address of the first data from the MCU, and determines the physical start address of the first data according to the logical start address. When the first data is not the initial first data (i.e. when the first data is non-initial first data), the data processing circuit determines the physical start address of the non-initial first data according to the physical start address of the initial first data and an offset between the physical start address of the non-initial first data and the physical start address of the initial first data. For example, if the physical start address of the first data is addr, and the offset between the physical start address of another first data and the physical start address of the initial first data is 4, then the physical start address of the another first data is addr+4. Or, when the first data is non-initial first data, the data processing circuit can also acquire the logical start address of the non-initial first data from the MCU, and determine the physical start address of the non-initial first data according to the logical start address.

Further, for one piece of the first data, whether the first data is the initial first data may be determined in the following optional way. Optionally, when the data processing circuit receives a first enable signal, it is determined that the first data is the initial first data; when the data processing circuit receives a second enable signal, it is determined that the first data is non-initial first data. Optionally, the first enable signal is an initial address access enable signal (spi_addr start), which is used to indicate that the first data is the initial first data, and to indicate to start the generation of the decryption keystream of the initial first data. The second enable signal is an FIFO write enable signal (FIFO_wr), which is used to indicate that the first data is non-initial first data, or to indicate to start the generation of the decryption keystream of the non-initial first data. The so-called "write" here refers to writing the data in the FLASH into the cache. For example, the first enable signal is 1 and the second enable signal is 0, or the first enable signal is 0 and the second enable signal is 1. The first enable signal and the second enable signal are not limited in this embodiment.

Optionally, the way in which the data processing circuit generates the decryption keystream of the first data includes any one of the following but is not limited thereto.

An optional method: the data processing circuit acquires a public key and generates an asymmetric shared key according to the public key, where the data processing circuit may generate the asymmetric shared key by using the existing RSA algorithm, which is not explained in this embodiment. Further, the data processing circuit may acquire an original vector, where the original vector includes some information which can be public, and the public information is used to generate the decryption keystream of the first data, for example, the public information includes random numbers. Finally, the data processing circuit may take the physical start address of the first data and the original vector as plaintext in a Counter (CTR) mode, and take the asymmetric shared key as a key in the CTR mode, so as to generate the decryption keystream of the first data.

Another optional method: the data processing circuit directly applies a certain algorithm to the physical start address of the first data to acquire the decryption keystream of the first data. For example, the data processing circuit extracts the last 8 bits of the physical start address of the first data as the decryption keystream of the first data. Or, the data processing circuit selects odd bits or even bits of the physical start address of the first data as the decryption keystream of the first data. Or, the data processing circuit selects odd bits or even bits of the physical start address of the first data firstly, and then performs operations, such as summation, quadrature, on the odd bits or even bits to acquire the decryption keystream of the first data.

S22 is described as follows.

Optionally, when a length of the decryption keystream and a length of the first data are the same, an XOR operation is performed on the decryption keystream and the first data to decrypt the first data; when the length of the decryption keystream is greater than the length of the first data, an extraction is performed on the decryption keystream in accordance with the length of first data, and the XOR operation is performed on the decryption keystream obtained after the extraction and the first data to decrypt the first data. For example, usually the first data is a data block with the length of 4 bytes (that is, 32 bits). Assuming that the decryption keystream is also 32 bits, the data processing circuit may directly perform the XOR operation on the decryption keystream and the first data to decrypt the first data. Assuming that the decryption keystream is 64 bits, the data processing circuit may extract the first 32 bits or the last 32 bits of the decryption keystream, and perform the XOR operation on the decryption keystream obtained after the extraction and the first data to decrypt the first data.

Further, the data processing circuit decrypts the first data through the decryption keystream, and then writes the decrypted first data into the cache for the MCU to execute the first data.

In this embodiment, the data processing circuit may generate the decryption keystream of the first data according to the physical start address of the first data before or during reading the first data from the flash. Base on this, as long as the data processing circuit acquires the first data, the decryption keystream of the first data has already been acquired, so that the data processing circuit may directly decrypt the first data, which thus can reduce data decryption delay. Optionally, in this embodiment, the data processing circuit may perform the XOR operation on the decryption keystream and the first data to decrypt the first data. Since the XOR operation is a combinational circuit, the data decryption delay can be further reduced in this way.

As mentioned above, the above data processing circuit may be integrated on an SoC chip, for example, the chip is integrated in the flash controller; or the data processing circuit is a flash controller or an SoC chip. Assuming that the data processing circuit is a circuit integrated in the flash controller, in fact, there are other modules in the flash controller. The above data processing method will be further described through the interaction between these modules and the data processing circuit.

FIG. 4 is a schematic diagram of internal modules and data processing flow of a flash controller provided in an embodiment of the present application. As shown in FIG. 4, the flash controller 40 includes: a finite state machine (FSM) module 41, a receive first input first output (rxFIFO) cache 42, a serial to parallel (S2P) interface 43, a first register 44, a data processing circuit 45 and a selector 49; where the data processing circuit 45 includes: a decryption keystream generating module 46, a second register 47, and an XOR operation module 48. For initial first data, the FSM module 41 can receive a logical start address AHB_addr of the initial first data and convert the logical start address AHB_addr into a physical start address, and transmit the physical start address of the initial first data to the decryption keystream generating module 46 in the data processing circuit 45 and send a first enable signal spi_addr_start to the decryption keystream generating module 46. For non-initial first data, the FSM module 41 can acquire a physical start address of the non-initial first data by calculating according to the physical start address of the initial first data and an offset between the physical start address of the non-initial first data and the physical start address of the initial first data, and then transmit the physical start address of the non-initial first data to the decryption keystream generating module 46 in the data processing circuit 45 and send the above-mentioned second enable signal FIFO wr to the decryption keystream generating module 46. Optionally, the data processing circuit 45 may send the physical start address of the first data to the decryption keystream generating module 46 through the first register 44, where the first register 44 is configured to implement clock synchronization between the flash controller 40 and the FLASH. Optionally, assuming that the decryption keystream of the first data is determined in the CTR mode in this embodiment, the decryption keystream generating module 46 may first acquire an asymmetric shared key and an original vector of the first data, and the data processing circuit may take the physical start address and the original vector of the first data as plaintext in the CTR mode, and then take the asymmetric shared key as the key in the CTR mode to generate the decryption keystream of the first data. Optionally, the decryption keystream generating module 46 may transmit the generated decryption keystream to the second register 47, where the second register 47 is also configured to implement the clock synchronization between the flash controller 40 and the FLASH. The second register 47 transmits the decryption keystream to the XOR operation module 48. On the other hand, the S2P module 49 in the data processing circuit 45 may read the first data from the FLASH through QSPI, where the S2P module 49 is configured to implement serial-to-parallel conversion, and the XOR operation module 48 may perform an XOR operation on the decryption keystream and the first data, that is, decrypt data to be interpreted. Optionally, the XOR operation module 48 may output the decrypted first data to the selector 49, so that the selector 49 only sends the decrypted first data to the rxFIFO cache 42, where the rxFIFO cache 42 needs to implement the clock synchronization between the flash controller 40 and the FLASH. At last, the rxFIFO cache 42 may write the decrypted first data into the cache through a bus (e.g., AHB bus) for the MCU to execute the decrypted first data.

The above modules and the data processing circuit can be understood as software modules, or as hardware circuits, which is not limited in this embodiment.

In this embodiment, the above data processing method is further described by dividing the flash controller into modules and through the interaction of the modules with the data processing circuit, where the data processing circuit generates the decryption keystream of the first data according to the physical start address of the first data before or during reading the first data from the flash. Based on this, as long as the data processing circuit acquires the first data, the decryption keystream of the first data has already been pre-generated, so that the data processing circuit may directly decrypt the first data, which thus reduces data decryption delay. Optionally, in this embodiment, the data processing circuit may perform the XOR operation on the decryption keystream and the first data to decrypt the first data. Since the XOR operation is a combinational circuit, the data decryption delay may be further reduced in this way.

The data reading process or data decryption process has been described above, and the data writing process or data encryption process will be described below.

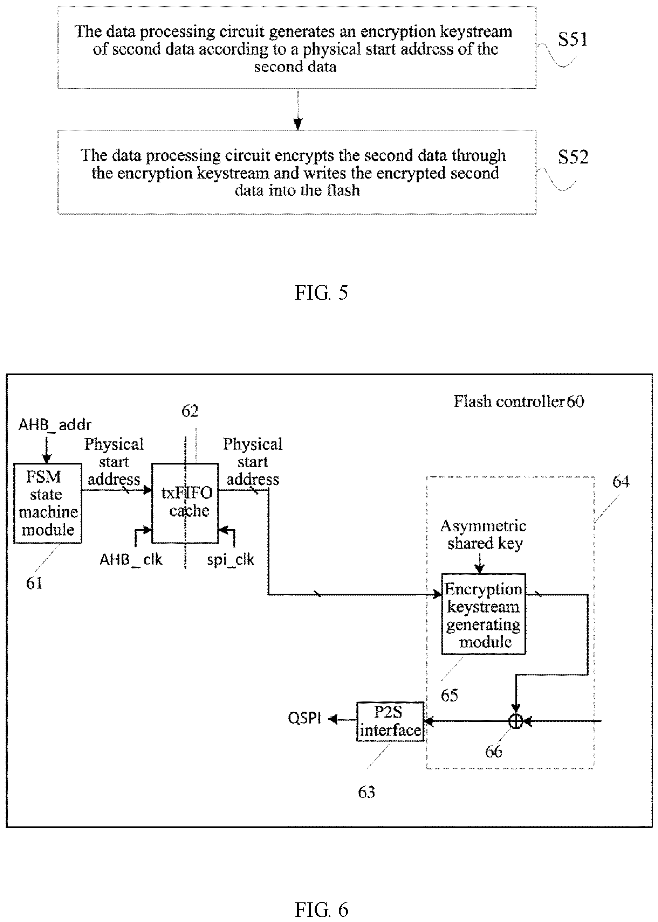

FIG. 5 is a flowchart of a data processing method provided in another embodiment of the present application, the executive subject of the method may be a data processing circuit or a terminal device. The data processing circuit may be integrated in the SoC chip, for example, the circuit is integrated in the flash controller, or the circuit is the flash controller or the SoC chip, which is not limited in the present application. In the following, the executive subject of the method is a data processing circuit, for example. As shown in FIG. 5, the method includes the following steps:
S51: the data processing circuit generates an encryption keystream of second data according to a physical start address of the second data.
S52: the data processing circuit encrypts the second data through the encryption keystream, and writes the encrypted second data into the flash
S51 is described as follows:

This embodiment is applied to the scenario where the data processing circuit writes data into the flash. As mentioned above, in order to achieve security of data, the data in the flash is encrypted, so the data needs to be encrypted when the data processing circuit accesses the data to the flash, where each of the second data has a unique encryption keystream.

In this embodiment, the data processing circuit can generate the encryption keystream of the second data according to the physical start address of the second data, where the physical start address of the second data refers to the physical start address of the second data in the flash.

For different second data, the data processing circuit acquires the physical start address of the second data in different ways. Optionally, when the second data is the initial second data, the data processing circuit acquires a logical start address of the second data from the MCU, and determines the physical start address of the second data according to the logical start address. When the second data is non-initial second data, the data processing circuit determines the physical start address of the non-initial second data according to the physical start address of the initial second data and an offset between the physical start address of the non-initial second data and that of the initial second data. For example, if the physical start address of the initial second data is addr, and the offset between the physical start address of another second data and the physical start address of the initial second data is 4, then the physical start address of the another second data is addr+4. Or, when the second data is non-initial second data, the data processing circuit can also acquire the logical start address of the non-initial second data from the MCU, and determine the physical start address of the non-initial second data according to the logical start address.

Optionally, the way in which the data processing circuit generates the encryption keystream of the second data includes any one of the following but is not limited thereto.

An optional method: the data processing circuit acquires a public key and generates an asymmetric shared key according to the public key, where the data processing circuit may generate the asymmetric shared key by using the existing RSA algorithm, which is not explained in this embodiment. Further, the data processing circuit may acquire an original vector, which includes some information can be public, and the public information is used to generate the encryption keystream of the second data, for example, the public information includes random numbers. Finally, the data processing circuit may take the physical start address of the second data and the original vector as plaintext in the CTR mode, and take the asymmetric shared key as key in the CTR mode, so as to generate the encryption keystream of the second data.

Another optional method: the data processing circuit directly applies certain algorithm to the physical start address of the second data to acquire the encryption keystream of the second data. For example, the data processing circuit extracts the last 8 bits of the physical start address of the second data as the encryption keystream of the second data. Or, the data processing circuit selects odd bits or even bits of the physical start address of the second data as the encryption keystream of the second data. Or, the data processing circuit selects odd bits or even bits of the physical start address of the second data firstly, and then performs operations such as summation, quadrature on the odd bits or even bits to acquire the encryption keystream of the second data.

It should be noted that the way in which the data processing circuit generates the encryption keystream is the same as the way in which the data processing circuit generates the decryption keystream.

S52 is described as follows:
Optionally, when a length of the encryption keystream and a length of the second data are the same, an XOR operation is performed on the encryption keystream and the second data to encrypt the second data; when the length of the encryption keystream is greater than the length of the second data, an extraction is performed on the encryption keystream in accordance with the length of the second data, and the XOR operation is performed on the encryption keystream obtained after the extraction and the second data to encrypt the second data. For example, usually the second data is a data block with the length of 4 bytes (that is, 32 bits). Assuming that the encryption keystream is also 32 bits, the data processing circuit may directly perform the XOR on the encryption keystream and the second data to encrypt the second data. Assuming that the encryption keystream is 64 bits, the data processing circuit may extract the first 32 bits or the last 32 bits of the encryption keystream, and perform the XOR operation on the encryption keystream obtained after the extraction and the second data to encrypt the second data.

It should be noted that the encryption process of the second data by the data processing circuit corresponds to the decryption process of the data. For example, for the same data, the data processing circuit performs the XOR operation on the data and encryption keystream, also, the data processing circuit performs the XOR operation on the data and the decryption keystream.

In this embodiment, for the same data, the corresponding encryption keystream thereof is the same as the decryption keystream thereof, that is, the synchronization of the encryption key and decryption key is realized.

As mentioned above, the data processing circuit above may be integrated in an SoC chip, for example, the data processing circuit is integrated in a flash controller, or the data processing circuit is a flash controller or the SoC chip. Assuming that the data processing circuit is a circuit integrated in the flash controller, in fact, there are other modules in the flash controller. The above data processing method will be further described through the interaction between these modules and the data processing in the following circuit.

FIG. 6 is a schematic diagram of the internal modules and data processing flow of a flash controller provided in another embodiment of the present application. As shown in FIG. 6, the flash controller 60 includes: a FSM module 61, a transmit first input first output (txFIFO) cache 62, a parallel to serial (P2S) interface 63, and a data processing circuit 64; where the data processing circuit 64 includes an encryption keystream generating module 65 and an XOR operation module 66.For initial second data, the FSM module 61 can receive a logical start address AHB_addr of the initial second data, and convert the logical start address AHB_addr into a physical start address, and transmit the physical start address of the initial second data to the txFIFO cache 62, which is configured to implement the clock synchronization between the flash controller 40 and the FLASH. The txFIFO cache 62 transmits the physical start address of the initial second data to the encryption keystream generating module 65 in the data processing circuit. For the non-initial second data, the FSM module 61 can acquire a physical start address of the non-initial second data by calculating according to the physical start address of the initial second data and the offset between the physical start address of the non-initial second data and the physical start address of the initial second data, and then transmit the physical start address of the non-initial second data to the encryption keystream generating module 65 in the data processing circuit 64. Optionally, assuming that the encryption keystream of the second data is determined in the CTR mode in this embodiment, the encryption keystream generating module 65 may first acquire an asymmetric shared key and an original vector of the second data, and the data processing circuit may take the physical start address and the original vector of the second data as plaintext in the CTR mode, and then take the asymmetric shared key as the key in the CTR mode to generate the encryption keystream of the second data. The encryption keystream generating module 65 transmits the encryption keystream to the XOR operation module 66, the XOR operation module 66 may perform an XOR operation on the encryption keystream and the second data, that is, encrypt the second data. On the other hand, the P2S interface 63 in the data processing circuit may write the second data into the FLASH in way of QSPI, where the P2S interface 63 is configured to implement parallel-to-serial conversion.

The above modules and data processing circuits may be understood as software modules, or as hardware circuits, which is not limited in this embodiment.

It should be noted that the data processing circuit 64 in this embodiment may be integrated with the data processing circuits involved in the above data reading process.

In this embodiment, the data processing method above is further described by dividing the flash controller into modules and through the interaction of these modules with the data processing circuit.

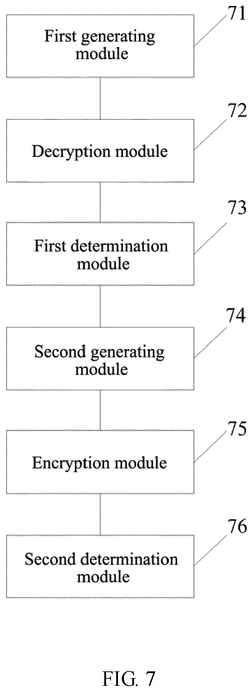

FIG. 7 is a schematic diagram of a data processing circuit provided in an embodiment of the present application. Optionally, the data processing circuit is a circuit in a flash controller, a flash controller, or a system-on-a-chip SoC. As shown in FIG. 7, the data processing circuit includes:
a first generating module 71, configured to generate a decryption keystream of first data according to a physical start address of the first data before or during reading the first data from a flash;
a decryption module 72, configured to decrypt the first data through the decryption keystream, and write the decrypted first data into a cache.

Optionally, the circuit further includes: a first determination module 73, configured to: when the first data is initial first data, acquire a logical start address of the first data from an MCU and determine a physical start address of the first data according to the logical start address; when the first data is non-initial first data, determine the physical start address of the non-initial first data according to the physical start address of the initial first data and an offset between the physical start address of the non-initial first data and the physical start address of the initial first data.

Optionally, the first determination module 73 is specifically configured to: determine that the first data is the initial first data when a first enable signal is received; and determine that the first data is the non-initial first data when a second enable signal is received.

Optionally, the first determination module 73 is specifically configured to: perform an XOR operation on the decryption keystream and the first data to decrypt the first data, when a length of the decryption keystream and a length of the first data are the same; and perform an extraction on the decryption keystream in accordance with the length of the first data and perform the XOR operation on the decryption keystream obtained after the extraction and the first data to decrypt the first data when the length of the decryption keystream is greater than that the length of the first data.

Optionally, the circuit further includes:
a second generating module 74, configured to generate an encryption keystream of the second data according to a physical start address of the second data;
an encryption module 75, configured to encrypt the second data through the encryption keystream and write the encrypted second data into the flash.

Optionally, the circuit further includes: a second determination module 76, configured to: when the second data is initial second data, acquire a logical start address of the initial second data from an MCU and determine the physical start address of the initial second data according to the logical start address; when the second data is non-initial second data, determine the physical start address of the non-initial second data according to the physical start address of the initial second data and an offset between the physical start address of the non-initial second data and the physical start address of the initial second data.

Optionally, the encryption module 75 is specifically configured to: perform an XOR operation on the encryption keystream and the second data to encrypt the second data when a length of the encryption keystream and a length of the second data are the same; perform an extraction on the encryption keystream in accordance with the length of the second data and perform the XOR operation on the encryption keystream obtained after the extraction and the second data to encrypt the second data when the length of the encrypted keystream is greater than the length of the second data.

The above modules can be understood as software modules, or as hardware circuits.

The first generating module 71 is equivalent to the decryption keystream generating module 46 in FIG. 4; the decryption module 72 is equivalent to the XOR operation module 48 in FIG. 4; the first determination module 73 is equivalent to the FSM module 41 in FIG. 4; the second generating module 74 is equivalent to the encryption keystream generating module 65 in FIG. 6; the encryption module 75 is equivalent to the XOR operation module 66 in FIG. 6; and the second determination module 76 is equivalent to the FSM module 61 in FIG. 6, where FSM module 41 and FSM module 61 may be the same FSM module.

The data processing circuit provided in this embodiment may execute the above data processing method, and for contents and effects thereof, the method parts may be referred to. Furthermore, the data processing circuits provided in embodiments of the present disclosure may be modularly designed with simple structure, and thus can be integrated into the flash controller.

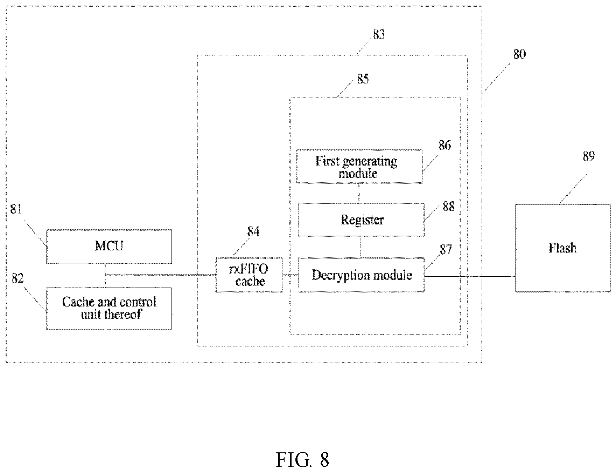

As mentioned above, the above modules and data processing circuits may be understood as software modules or hardware circuits. Assuming that these modules are hardware circuits, further, FIG. 8 is a schematic diagram of an embedded SoC chip and an external FLASH provided in an embodiment of the present application. As shown in FIG. 8, the SoC chip 80 includes an MCU 81, a cache and a control unit 82 of the cache, and a FLASH controller 83, where the FLASH controller 83 includes a rxFIFO cache 84 and a data processing circuit 85; the data processing circuit 85 includes a first generating module 86 and a decryption module 87. Optionally, the data processing circuit 85 further includes a register 88. The MCU 81 is connected with the cache and the control unit 82 of the cache, and the FLASH controller 83 through a bus (e.g. AHB bus), specifically connected with the rxFIFO cache 84; the first generating module 86 is connected with the decryption module 87 through the register 88, and the decryption module 87 is connected with a flash 89; where the MCU 81, the cache and the control unit 82 of the cache, and the Flash controller 83 may refer to corresponding embodiment in FIG. 1, the rxFIFO cache 84 may refer to corresponding embodiment in FIG. 4, the first generating module 86 and the decryption module 87 may refer to corresponding embodiment in FIG. 7, which the contents and effects will not be repeated here.

The present application also provides a data processing circuit, which includes a processor; a memory configured to store instructions executable by the processor to cause the processor to execute the above the data processing method, the memory may be a non-volatile storage medium, and its contents and effects may be referred to the method part, which will not be repeated here.

The present application also provides a terminal device, which includes the data processing circuits described above, an MCU and a flash; where two ends of the data processing circuit are connected with the MCU and the flash respectively. The data processing circuit may be configured to execute the above data processing methods, and for contents and effects thereof, the method parts can be referred to, which will not be described here.

Persons of ordinary skill in the art can understand that all or part of the steps for implementing the above-mentioned method embodiments can be completed by hardware related to program instructions. The aforementioned program can be stored in a computer readable storage medium. When the program is executed, the steps including the above method embodiments are executed. The aforementioned storage media include a ROM, a RAM, a magnetic disk or an optical disk and etc., which can store program codes.

Finally, it should be noted that the foregoing embodiments are merely intended for describing the technical solutions of the present disclosure other than limiting the present disclosure. Although the present disclosure is described in detail with reference to the foregoing embodiments, persons of ordinary skill in the art should understand that they may still make modifications to the technical solutions described in the foregoing embodiments or make equivalent substitutions to some technical features thereof, without departing from the scope of the technical solutions of embodiments of the present disclosure.

## Claims

1. A data processing method, comprising:
generating (S21) a decryption keystream of first data according to a physical start address of the first data before or during reading the first data from a flash, wherein the first data is a data block; and
decrypting (S22) the first data through the decryption keystream and writing the decrypted first data into a cache;
wherein the method further comprises:
when the first data is initial first data, acquiring a logical start address of the initial first data from a microcontroller unit, MCU, and determining the physical start address of the initial first data according to the logical start address; and
when the first data is non-initial first data, determining the physical start address of the non-initial first data according to the physical start address of the initial first data and an offset between the physical start address of the non-initial first data and the physical start address of the initial first data;
wherein the method further comprises:
determining that the first data is the initial first data when a first enable signal is received; and
determining that the first data is the non-initial first data when a second enable signal is received, wherein the first enable signal is different from the second enable signal.

2. The method according to claim 1, wherein the decrypting the first data through the decryption keystream comprises:
performing an XOR operation on the decryption keystream and the first data to decrypt the first data, when a length of the decryption keystream and a length of the first data are the same; and
performing an extraction on the decryption keystream in accordance with the length of the first data and performing the XOR operation on the decryption keystream obtained after the extraction and the first data to decrypt the first data, when the length of the decryption keystream is greater than the length of the first data.

3. The method according to claim 1, further comprising:
generating (S51) an encryption keystream of second data according to a physical start address of the second data; and
encrypting (S52) the second data through the encryption keystream and writing the encrypted second data into the flash.

4. The method according to claim 3, further comprising:
when the second data is initial second data, acquiring a logical start address of the initial second data from an MCU and determining the physical start address of the initial second data according to the logical start address; and
when the second data is non-initial second data, determining the physical start address of the non-initial second data according to the physical start address of the initial second data and an offset between the physical start address of the non-initial second data and the physical start address of the initial second data.

5. A data processing circuit (85), comprising:
a first generating module (71, 86), configured to generate a decryption keystream of first data according to a physical start address of the first data before or during reading the first data from a flash (89), wherein the first data is a data block; and
a decryption module (72, 87), configured to decrypt the first data through the decryption keystream and write the decrypted first data into a cache (82);
wherein the circuit (85) further comprises: a first determination module (73), configured to:
when the first data is initial first data, acquire a logical start address of the initial first data from a microcontroller unit (81), MCU, and determine the physical start address of the initial first data according to the logical start address; and
when the first data is non-initial first data, determine the physical start address of the non-initial first data according to the physical start address of the initial first data and an offset between the physical start address of the non-initial first data and the physical start address of the initial first data;
wherein the first determination module (73) is specifically configured to:
determine that the first data is the initial first data when a first enable signal is received; and
determine that the first data is the non-initial first data when a second enable signal is received, wherein the first enable signal is different from the second enable signal.

6. The circuit (85) according to claim 5, wherein the decryption module (72, 87) is specifically configured to:
decrypt the first data by performing an XOR operation on the decryption keystream and the first data when a length of the decryption keystream and that of the first data are the same; and
perform an extraction on the decryption keystream in accordance with the length of the first data and performing the XOR operation on the decryption keystream obtained after the extraction and the first data to decrypt the first data when the length of the decryption keystream is greater than the length of the first data.

7. The circuit (85) according to claim 5, further comprising:
a second generating module (74), configured to generate an encryption keystream of the second data according to a physical start address of the second data; and
an encryption module (75), configured to encrypt the second data through the encryption keystream and write the encrypted second data into the flash (89).

8. The circuit (85) according to claim 7, further comprising: a second determination module (76), configured to:
when the second data is initial second data, acquire a logical start address of the initial second data from an MCU (81) and determine the physical start address of the initial second data according to the logical start address; and
when the second data is non-initial second data, determine the physical start address of the non-initial second data according to the physical start address of the initial second data and an offset between the physical start address of the non-initial second data and the physical start address of the initial second data.

9. The circuit (85) according to claim 8, wherein the encryption module (75) is specifically configured to:
perform an XOR operation on the encryption keystream and the second data to encrypt the second data when a length of the encryption keystream and a length of the second data are the same; and
perform an extraction on the encryption keystream in accordance with the length of the second data and perform the XOR operation on the encryption keystream obtained after the extraction and the second data to encrypt the second data, when the length of the encrypted keystream is greater than the length of the second data.

10. The circuit (85) according to any one of claims 5-9, wherein the circuit (85) is any one of the following: a circuit (85) in a flash controller (83), a flash controller (83), and a system-on-a-chip SoC (80).

11. A terminal device, comprising: the data processing circuit according to any one of claims 5-10, a microcontroller unit (81), MCU, and a flash (89);
wherein two ends of the data processing circuit are respectively connected with the MCU and the flash (89).

## Patentansprüche

1. Datenverarbeitungsverfahren, das Folgendes umfasst:
Erzeugen (S21) eines Entschlüsselungs-Schlüsselstroms von ersten Daten gemäß einer physikalischen Startadresse der ersten Daten vor oder während des Lesens der ersten Daten aus einem Flash-Speicher, wobei die ersten Daten ein Datenblock sind; und
Entschlüsseln (S22) der ersten Daten durch den Entschlüsselungs-Schlüsselstrom und Schreiben der entschlüsselten ersten Daten in einen Cache;
wobei das Verfahren ferner Folgendes umfasst:
wenn die ersten Daten anfängliche erste Daten sind, Erfassen einer logischen Startadresse der anfänglichen ersten Daten von einer Mikrocontrollereinheit, (MicroController Unit, MCU) und Bestimmen der physikalischen Startadresse der anfänglichen ersten Daten gemäß der logischen Startadresse; und
wenn die ersten Daten nicht-anfängliche erste Daten sind, Bestimmen der physikalischen Startadresse der nicht-anfänglichen ersten Daten gemäß der physikalischen Startadresse der anfänglichen ersten Daten und eines Offset zwischen der physikalischen Startadresse der nicht-anfänglichen ersten Daten und der physikalischen Startadresse der anfänglichen ersten Daten;
wobei das Verfahren ferner Folgendes umfasst:
Bestimmen, dass die ersten Daten die anfänglichen ersten Daten sind, wenn ein erstes Freigabesignal empfangen wird; und
Bestimmen, dass die ersten Daten die nicht-anfänglichen ersten Daten sind, wenn ein zweites Freigabesignal empfangen wird, wobei das erste Freigabesignal von dem zweiten Freigabesignal verschieden ist.

2. Verfahren nach Anspruch 1, wobei das Entschlüsseln der ersten Daten durch den Entschlüsselungs-Schlüsselstrom Folgendes umfasst:
Durchführen einer XOR-Operation an dem Entschlüsselungs-Schlüsselstrom und den ersten Daten, um die ersten Daten zu entschlüsseln, wenn eine Länge des Entschlüsselungs-Schlüsselstroms und eine Länge der ersten Daten dieselben sind; und
Durchführen einer Extraktion an dem Entschlüsselungs-Schlüsselstrom in Übereinstimmung mit der Länge der ersten Daten und Durchführen der XOR-Operation an dem Entschlüsselungs-Schlüsselstrom, der nach der Extraktion erhalten wurde, und den ersten Daten, um die ersten Daten zu entschlüsseln, wenn die Länge des Entschlüsselungs-Schlüsselstroms größer ist als die Länge der ersten Daten.

3. Verfahren nach Anspruch 1, das ferner Folgendes umfasst:
Erzeugen (S51) eines Verschlüsselungs-Schlüsselstroms von zweiten Daten gemäß einer physikalischen Startadresse der zweiten Daten; und
Verschlüsseln (S52) der zweiten Daten durch den Verschlüsselungs-Schlüsselstrom und Schreiben der verschlüsselten zweiten Daten in den Flash-Speicher.

4. Verfahren nach Anspruch 3, das ferner Folgendes umfasst:
wenn die zweiten Daten anfängliche zweite Daten sind, Erfassen einer logischen Startadresse der anfänglichen zweiten Daten von einer MCU und Bestimmen der physikalischen Startadresse der anfänglichen zweiten Daten gemäß der logischen Startadresse; und
wenn die zweiten Daten nicht-anfängliche zweite Daten sind, Bestimmen der physikalischen Startadresse der nicht-anfänglichen zweiten Daten gemäß der physikalischen Startadresse der anfänglichen zweiten Daten und eines Offset zwischen der physikalischen Startadresse der nicht-anfänglichen zweiten Daten und der physikalischen Startadresse der anfänglichen zweiten Daten.

5. Datenverarbeitungsschaltung (85), die Folgendes umfasst:
ein erstes Erzeugungsmodul (71, 86), das dafür konfiguriert ist, einen Entschlüsselungs-Schlüsselstrom von ersten Daten gemäß einer physikalischen Startadresse der ersten Daten vor oder während des Lesens der ersten Daten aus einem Flash-Speicher (89) zu erzeugen, wobei die ersten Daten ein Datenblock sind; und
ein Entschlüsselungsmodul (72, 87), das dafür konfiguriert ist, die ersten Daten mittels des Entschlüsselungs-Schlüsselstroms zu entschlüsseln und die entschlüsselten ersten Daten in einen Cache (82) zu schreiben;
wobei die Schaltung (85) ferner ein erstes Bestimmungsmodul (73) umfasst, das für Folgendes konfiguriert ist:
wenn die ersten Daten anfängliche erste Daten sind, Erfassen einer logischen Startadresse der anfänglichen ersten Daten von einer Mikrocontrollereinheit (81), MCU, und Bestimmen der physikalischen Startadresse der anfänglichen ersten Daten gemäß der logischen Startadresse; und
wenn die ersten Daten nicht-anfängliche erste Daten sind, Bestimmen der physikalischen Startadresse der nicht-anfänglichen ersten Daten gemäß der physikalischen Startadresse der anfänglichen ersten Daten und eines Offset zwischen der physikalischen Startadresse der nicht-anfänglichen ersten Daten und der physikalischen Startadresse der anfänglichen ersten Daten; und
wobei das erste Bestimmungsmodul (73) spezifisch für Folgendes konfiguriert ist:
Bestimmen, dass die ersten Daten die anfänglichen ersten Daten sind, wenn ein erstes Freigabesignal empfangen wird;
Bestimmen, dass die ersten Daten die nicht-anfänglichen ersten Daten sind, wenn ein zweites Freigabesignal empfangen wird, wobei das erste Freigabesignal von dem zweiten Freigabesignal verschieden ist.

6. Schaltung (85) nach Anspruch 5, wobei das Entschlüsselungsmodul (72, 87) spezifisch für Folgendes konfiguriert ist:
Entschlüsseln der ersten Daten durch Ausführen einer XOR-Operation an dem Entschlüsselungs-Schlüsselstrom und den ersten Daten, wenn eine Länge des Entschlüsselungs-Schlüsselstroms und die der ersten Daten gleich sind; und
Durchführen einer Extraktion an dem Entschlüsselungs-Schlüsselstrom in Übereinstimmung mit der Länge der ersten Daten und Durchführen der XOR-Operation an dem Entschlüsselungs-Schlüsselstrom, der nach der Extraktion erhalten wurde, und den ersten Daten, um die ersten Daten zu entschlüsseln, wenn die Länge des Entschlüsselungs-Schlüsselstroms größer ist als die Länge der ersten Daten.

7. Schaltung (85) nach Anspruch 5, die ferner Folgendes umfasst:
ein zweites Erzeugungsmodul (74), das dafür konfiguriert ist, einen Verschlüsselungs-Schlüsselstrom der zweiten Daten gemäß einer physikalischen Startadresse der zweiten Daten zu erzeugen; und
ein Verschlüsselungsmodul (75), das dafür konfiguriert ist, die zweiten Daten mit Hilfe des Verschlüsselungs-Schlüsselstroms zu verschlüsseln und die verschlüsselten zweiten Daten in den Flash-Speicher (89) zu schreiben.

8. Schaltung (85) nach Anspruch 7, die ferner ein zweites Bestimmungsmodul (76) umfasst, das für Folgendes konfiguriert ist:
wenn die zweiten Daten anfängliche zweite Daten sind, Erfassen einer logischen Startadresse der anfänglichen zweiten Daten von einer MCU (81) und Bestimmen der physikalischen Startadresse der anfänglichen zweiten Daten gemäß der logischen Startadresse; und
wenn die zweiten Daten nicht-anfängliche zweite Daten sind, Bestimmen der physikalischen Startadresse der nicht-anfänglichen zweiten Daten gemäß der physikalischen Startadresse der anfänglichen zweiten Daten und eines Offset zwischen der physikalischen Startadresse der nicht-anfänglichen zweiten Daten und der physikalischen Startadresse der anfänglichen zweiten Daten.

9. Schaltung (85) nach Anspruch 8, wobei das Verschlüsselungsmodul (75) spezifisch für Folgendes konfiguriert ist:
Durchführen einer XOR-Operation an dem Verschlüsselungs-Schlüsselstrom und den zweiten Daten, um die zweiten Daten zu verschlüsseln, wenn eine Länge des Verschlüsselungs-Schlüsselstroms und eine Länge der zweiten Daten dieselben sind; und
Durchführen einer Extraktion an dem Verschlüsselungs-Schlüsselstrom in Übereinstimmung mit der Länge der zweiten Daten und Durchführen der XOR-Operation an dem Verschlüsselungs-Schlüsselstrom, der nach der Extraktion erhalten wurde, und den zweiten Daten, um die zweiten Daten zu verschlüsseln, wenn die Länge des Verschlüsselungs-Schlüsselstroms größer ist als die Länge der zweiten Daten.

10. Schaltung (85) nach einem der Ansprüche 5 bis 9, wobei die Schaltung (85) eine der folgenden ist: eine Schaltung (85) in einem Flash-Controller (83), ein Flash-Controller (83) und ein System-on-a-Chip, SoC, (80).

11. Endvorrichtung, die Folgendes umfasst: die Datenverarbeitungsschaltung nach einem der Ansprüche 5 bis 10, eine Mikrocontrollereinheit (81), MCU, und einen Flash-Speicher (89);
wobei zwei Enden der Datenverarbeitungsschaltung jeweils mit der MCU und dem Flash-Speicher (89) verbunden sind.

## Revendications

1. Procédé de traitement de données, comprenant :
la génération (S21) d'un flot de clés de décryptage de premières données selon une adresse de départ physique des premières données avant ou pendant la lecture des premières données à partir d'une mémoire flash, dans lequel les premières données sont un bloc de données ; et
le décryptage (S22) des premières données via le flot de clés de décryptage et l'écriture des premières données décryptées dans une mémoire cache ;
dans lequel le procédé comprend en outre :
lorsque les premières données sont des premières données initiales, l'acquisition d'une adresse de départ logique des premières données initiales à partir d'une unité de microcontrôleur, MCU,
et la détermination de l'adresse de départ physique des premières données initiales selon l'adresse de départ logique ; et
lorsque les premières données sont des premières données non initiales, la détermination de l'adresse de départ physique des premières données non initiales selon l'adresse de départ physique des premières données initiales et un décalage entre l'adresse de départ physique des premières données non initiales et l'adresse physique de départ des premières données initiales ;
dans lequel le procédé comprend en outre :
la détermination que les premières données sont les premières données initiales lorsqu'un premier signal de validation est reçu ; et
la détermination que les premières données sont les premières données non initiales lorsqu'un deuxième signal de validation est reçu, dans lequel le premier signal de validation est différent du deuxième signal de validation.

2. Procédé selon la revendication 1, dans lequel le décryptage des premières données via le flot de clés de décryptage comprend :
l'exécution d'une opération XOR sur le flot de clés de décryptage et les premières données pour décrypter les premières données, lorsqu'une longueur du flot de clés de décryptage et une longueur des premières données sont les mêmes ; et
l'exécution d'une extraction sur le flot de clés de décryptage conformément à la longueur des premières données et l'exécution de l'opération XOR sur le flot de clés de décryptage obtenu après l'extraction et les premières données pour décrypter les premières données, lorsque la longueur du flot de clés de décryptage est supérieure à la longueur des premières données.

3. Procédé selon la revendication 1, comprenant en outre :
la génération (S51) d'un flot de clés de cryptage de deuxièmes données selon une adresse de départ physique des deuxièmes données ; et
le cryptage (S52) des deuxièmes données via le flot de clés de cryptage et l'écriture des deuxièmes données cryptées dans la mémoire flash.

4. Procédé selon la revendication 3, comprenant en outre :
lorsque les deuxièmes données sont des deuxièmes données initiales, l'acquisition d'une adresse de départ logique des deuxièmes données initiales à partir d'une MCU et la détermination de l'adresse de départ physique des deuxièmes données initiales selon l'adresse de départ logique ; et
lorsque les deuxièmes données sont des deuxièmes données non initiales, la détermination de l'adresse de départ physique des deuxièmes données non initiales selon l'adresse de départ physique des deuxièmes données initiales et d'un décalage entre l'adresse de départ physique des deuxièmes données non initiales et l'adresse de départ physique des deuxièmes données initiales.

5. Circuit de traitement de données (85), comprenant :
un premier module de génération (71, 86), configuré pour générer un flot de clés de décryptage de premières données selon une adresse physique de départ des premières données avant ou pendant la lecture des premières données à partir d'une mémoire flash (89), dans lequel les premières données sont un bloc de données ; et
un module de décryptage (72, 87), configuré pour décrypter les premières données via le flot de clés de décryptage et écrire les premières données décryptées dans une mémoire cache (82) ;
dans lequel le circuit (85) comprend en outre : un premier module de détermination (73), configuré pour :
lorsque les premières données sont des premières données initiales, acquérir une adresse de départ logique des premières données initiales à partir d'une unité de microcontrôleur (81), MCU, et déterminer l'adresse de départ physique des premières données initiales selon l'adresse de départ logique ; et
lorsque les premières données sont des premières données non initiales, déterminer l'adresse de départ physique des premières données non initiales selon l'adresse de départ physique des premières données initiales et d'un décalage entre l'adresse de départ physique des premières données non initiales et l'adresse physique de départ des premières données initiales ;
dans lequel le premier module de détermination (73) est spécifiquement configuré pour :
déterminer que les premières données sont les premières données initiales lorsqu'un premier signal de validation est reçu ; et
déterminer que les premières données sont les premières données non initiales lorsqu'un deuxième signal de validation est reçu, le premier signal de validation étant différent du deuxième signal de validation.

6. Circuit (85) selon la revendication 5, dans lequel le module de décryptage (72, 87) est spécifiquement configuré pour :
décrypter les premières données en effectuant une opération XOR sur le flot de clés de décryptage et les premières données lorsqu'une longueur du flot de clés de décryptage et celle des premières données sont les mêmes ; et
effectuer une extraction sur le flot de clés de décryptage selon la longueur des premières données et effectuer l'opération XOR sur le flot de clés de décryptage obtenu après l'extraction et les premières données pour déchiffrer les premières données lorsque la longueur du flot de clés de décryptage est supérieure à la longueur des premières données.

7. Circuit (85) selon la revendication 5, comprenant en outre :
un deuxième module de génération (74), configuré pour générer un flot de clés de décryptage des deuxièmes données selon une adresse physique de départ des deuxièmes données ; et
un module de cryptage (75), configuré pour crypter les deuxièmes données via le flot de clés de cryptage et écrire les deuxièmes données cryptées dans la mémoire flash (89).

8. Circuit (85) selon la revendication 7, comprenant en outre : un deuxième module de détermination (76), configuré pour :
lorsque les deuxièmes données sont des deuxièmes données initiales, acquérir une adresse logique de départ des deuxièmes données initiales à partir d'une MCU (81) et déterminer l'adresse de départ physique des deuxièmes données initiales selon l'adresse de départ logique ; et
lorsque les deuxièmes données sont des deuxièmes données non initiales, déterminer l'adresse de départ physique des deuxièmes données non initiales selon l'adresse de départ physique des deuxièmes données initiales et d'un décalage entre l'adresse de départ physique des deuxièmes données non initiales et l'adresse de départ physique des deuxièmes données initiales.

9. Circuit (85) selon la revendication 8, dans lequel le module de cryptage (75) est spécifiquement configuré pour :
effectuer une opération XOR sur le flot de clés de cryptage et les deuxièmes données pour crypter les deuxièmes données lorsqu'une longueur du flot de clés de cryptage et une longueur des deuxièmes données est la même ; et
effectuer une extraction sur le flot de clés de cryptage conformément à la longueur des deuxièmes données et effectuer l'opération XOR sur le flot de clés de cryptage obtenu après l'extraction et les deuxièmes données pour crypter les deuxièmes données, lorsque la longueur du flot de clés de cryptage est supérieure à la longueur des deuxièmes données.

10. Circuit (85) selon l'une quelconque des revendications 5 à 9, dans lequel le circuit (85) est l'un quelconque des suivants : un circuit (85) dans un contrôleur de flash (83), un contrôleur de flash (83), et un système sur puce SoC (80).

11. Dispositif terminal, comprenant : le circuit de traitement de données selon l'une quelconque des revendications 5 à 10, une unité de microcontrôleur (81), MCU, et une mémoire flash (89) ;
dans lequel deux extrémités du circuit de traitement de données sont respectivement connectées au MCU et à la mémoire flash (89).
